Europäisches Patentamt

European Patent Office

Office européen des brevets

(19)

(11) **EP 0 839 674 B1**

(12) **FASCICULE DE BREVET EUROPEEN**

(45) Date de publication et mention
de la délivrance du brevet:
**02.04.2003 Bulletin 2003/14**

(51) Int Cl.⁷: **B60C 15/06**, B60C 15/00,
B60C 15/024

(21) Numéro de dépôt: **97118228.2**

(22) Date de dépôt: **21.10.1997**

(54) **Pneumatique à bourrelets conçus pour faciliter le démontage**

Luftreifen mit Wülsten zur Erleichterung des Demontierens

Tyre with a bead that makes removing easier

(84) Etats contractants désignés:
**DE ES FR GB IT SE**

(30) Priorité: **30.10.1996 FR 9613388**

(43) Date de publication de la demande:
**06.05.1998 Bulletin 1998/19**

(73) Titulaire: **COMPAGNIE GENERALE DES
ETABLISSEMENTS MICHELIN-MICHELIN & CIE
F-63040 Clermont-Ferrand Cédex 01 (FR)**

(72) Inventeurs:
• **Costa Pereira, Pedro
63000 Clermont-Ferrand (FR)**
• **Pradelle, Jacques
63000 Clermont-Ferrand (FR)**

(74) Mandataire:
**Dequire, Philippe Jean-Marie Denis et al
Michelin & Cie,
Service SGD/LG/PI-LAD
63040 Clermont Ferrand Cedex 9 (FR)**

(56) Documents cités:
**EP-A- 0 677 554          WO-A-93/12943
GB-A- 2 004 508**

• **PATENT ABSTRACTS OF JAPAN vol. 007, no.
079 (M-204), 31 mars 1983 & JP 58 004608 A
(SUMITOMO GOMU KOGYO KK), 11 janvier 1983,**
• **DATABASE WPI Section Ch, Week 9344 Derwent
Publications Ltd., London, GB; Class A12, AN
93-348558 XP002034961 & JP 05 255 519 A
(MARUGO GOMU KOGYO KK) , 5 octobre 1993**

**Description**

La présente invention se rapporte aux pneumatiques. Plus particulièrement, elle concerne une conception perfectionnée de leurs bourrelets destinée à faciliter leur démontage.

On connaît le rôle des bourrelets des pneumatiques : il s'agit d'assurer "l'accrochage" du pneumatique sur la jante sur laquelle il est monté. A cette fin, les câbles de carcasse rejoignent tous la partie basse du bourrelet, où ils sont fermement ancrés, afin que la carcasse résiste aux efforts de tension en service.

En dehors des sollicitations dues à l'utilisation proprement dite du pneumatique, celui-ci doit en outre être capable de subir un nombre indéterminé de démontages suivis de remontages pour en poursuivre l'utilisation.

Le démontage notamment implique d'appliquer un effort assez important sur le bourrelet au niveau du crochet de la jante, ou juste au-dessus de celui-ci. Cet effort est orienté parallèlement à l'axe de rotation et est habituellement appliqué par un poussoir sur des portions successives de la circonférence du bourrelet correspondant à des arcs de cercle d'environ 60 degrés. C'est la première phase du démontage dont le but est de décoincer le bourrelet, c'est à dire de lui faire quitter son siège ou paroi radialement intérieure en l'éloignant du rebord de jante et de l'amener jusqu'au creux central de la jante. Pendant cette première phase, le bourrelet du pneumatique est soumis à des efforts d'extension relativement localisés et très importants.

Ensuite, on utilise en général des leviers pour contraindre le bourrelet à franchir le rebord de jante. En effet, dans le cas des jantes en une seule pièce (cas de loin le plus courant pour les pneumatiques de tourisme), la forme de la jante est conçue pour permettre le montage et le démontage grâce à une ovalisation du bourrelet, sans augmentation du périmètre de celui-ci. Cela conditionne notamment le dessin du creux central de montage et des rebords bordant latéralement la jante et définissant la position de montage du bourrelet. Pendant cette seconde phase, le bourrelet subit une déformation d'ensemble qui est bien moins pénalisante que les sollicitations survenant pendant la première phase.

Il est bien connu qu'un démontage réalisé dans des conditions peu soigneuses peut endommager de façon irréversible le bourrelet (ruptures de câbles de carcasse, déchirures de la pointe intérieure du bourrelet retenue usuellement par un hump...) à cause des efforts d'extension localisés et importants subis lors de la première phase du démontage.

C'est ce qui est susceptible de se produire lorsque l'on veut décoincer le bourrelet en une seule fois avec le poussoir en imposant un déport localisé élevé du bourrelet relativement au crochet de jante. Après quelques mois ou années d'utilisation, il est courant que les bourrelets adhérent fortement contre les sièges et crochets de jante. En conséquence, ce déport important et localisé impose notamment un allongement de la longueur des fils de tringles qui peut entraîner des dommages irréparables au bourrelet du pneumatique.

Le document JP58-4608 présente un pneumatique dont la partie des bourrelets destinée à être en contact avec le siège d'une jante est revêtue d'une couche poreuse de polytétrafluoroéthylène. Cette couche a pour but de faciliter la mise en place du pneumatique sur la jante. Les caractéristiques du préambule de la revendication 1 correspondent à cet état de la technique.

L'invention a pour objet un perfectionnement des bourrelets d'un pneumatique destiné à faciliter ses démontages successifs sans endommagement de ses bourrelets et sans sacrifier ses performances en usage.

Selon l'invention, un pneumatique comportant un sommet et des flancs prolongés par des bourrelets définissant une cavité interne, chaque bourrelet étant délimité, du côté radialement intérieur, par une paroi radialement intérieure ayant une partie axialement extérieure et une partie axialement intérieure, ladite paroi étant sensiblement tronconique et étant destinée à reposer sur une jante et, du côté de la cavité interne du pneumatique, par une paroi axialement intérieure, est caractérisé en ce qu'une couche de glissement recouvre la partie axialement intérieure de la paroi radialement intérieure et au moins la partie radialement la plus basse de la paroi axialement intérieure.

La couche de glissement ne revêt que la partie axialement intérieure de la paroi radialement intérieure, c'est-à-dire la partie de cette paroi disposée du côté de la cavité interne du pneumatique. Cette limitation est très importante pour ne pas dégrader les propriétés d'usage du pneumatique, notamment l'efficacité anti-décoincement des « humps» et pour éviter toute rotation sur jante.

Préférentiellement, la partie de la paroi axialement intérieure recouverte par ladite couche de glissement s'étend radialement sur une longueur d'au moins 10 mm.

Lors d'un démontage du pneumatique, le bourrelet va, sous l'action de l'outil de démontage (le poussoir), entamer un mouvement de basculement centré sur la zone de liaison entre la paroi axialement intérieure et la paroi radialement intérieure du bourrelet. L'amplitude de ce basculement est fonction de la rigidité en rotation du bourrelet. Dans le cas, le plus courant, d'un bourrelet rigide en rotation, le basculement est très limité. Ce mouvement induit cependant une augmentation des pressions de contact dans la zone de la paroi radialement intérieure la plus proche de la cavité interne du pneumatique, zone comportant la couche de glissement, et une diminution des efforts de serrage entre le reste de la paroi radialement intérieure et la jante. En conséquence, les efforts dus au serrage du bourrelet sur la jante sont majoritairement transmis dans une zone où le coefficient de glissement entre la paroi radialement intérieure et la jante est très faible, ce qui facilite fortement le décoincement du bourrelet, le franchissement du hump et augmente sensiblement la valeur de l'arc de cercle de bourrelet décoincé pour une valeur donnée du déport imposé par le poussoir.

Dans le cas où le pneumatique présente des bourrelets de faible rigidité en rotation, les efforts transmis par le poussoir peuvent entraîner un basculement complet et mettre en contact la paroi axialement intérieure du bourrelet avec la jante. Comme la paroi axialement intérieure du bourrelet est elle aussi recouverte d'une couche de glissement, la zone de contact entre le bourrelet et la jante présente de nouveau un faible coefficient de frottement, ce qui facilite le décoincement du bourrelet, le franchissement du hump et comme précédemment augmente sensiblement la valeur de l'arc de cercle de bourrelet décoincé pour une valeur donnée du déport imposé par le poussoir.

Ainsi, quelle que soit l'architecture du bourrelet, la présence de la couche de glissement diminue les allongements imposés aux fils de tringle lors d'un démontage, ce qui limite leurs risques d'endommagement.

La couche de glissement a pour fonction de procurer un coefficient de frottement bas entre le bourrelet et la jante pendant toute la durée de vie du pneumatique. Cette couche peut notamment être constituée d'une languette de caoutchouc à base de siloxane de diméthyle telle que proposée par la demande JP 4-40208.

Préférentiellement, la couche de glissement est constituée par la migration en surface d'un composé présent dans le mélange de caoutchouc adjacent aux parties recouvertes des parois radialement et axialement intérieures des bourrelets.

Le composé présent dans le mélange de caoutchouc adjacent aux parties des parois du bourrelet recouvertes de la couche de glissement peut être un amide d'acide gras et de préférence un oléamide.

Parmi ceux-ci, l'éthylène bis oléamide a l'avantage d'avoir une température de fusion élevée et ainsi d'offrir à la couche de glissement, après sa constitution par migration, une bonne stabilité.

Le mélange de caoutchouc adjacent comprend au moins un élastomère choisi dans le groupe des caoutchoucs naturel, polybutadiène, SBR, butyle, la teneur en caoutchouc butyle étant inférieure ou égale à 50 parties pour cent parties en poids d'élastomère, ainsi qu'au moins 3 parties pour cent parties en poids d'élastomère du composé.

L'invention sera mieux comprise à l'aide de la description qui va suivre, donnée à titre non limitatif, en se référant au dessin annexé sur lequel :

- la figure 1 est une vue en coupe d'un bourrelet de pneumatique selon l'invention ;
- la figure 2 présente schématiquement le bourrelet de la figure 1 pendant un démontage ;
- la figure 3 est un schéma similaire à celui de la figure 2 dans le cas d'un démontage dans des conditions plus sévères ;
- la figure 4 présente schématiquement, avec rabattement partiel, l'évolution de la position du bourrelet en fonction de sa position angulaire ; et
- la figure 5 illustre la relation entre l'allongement moyen imposé à une tringle en fonction de l'angle de décoincement et de la valeur du déport du bourrelet.

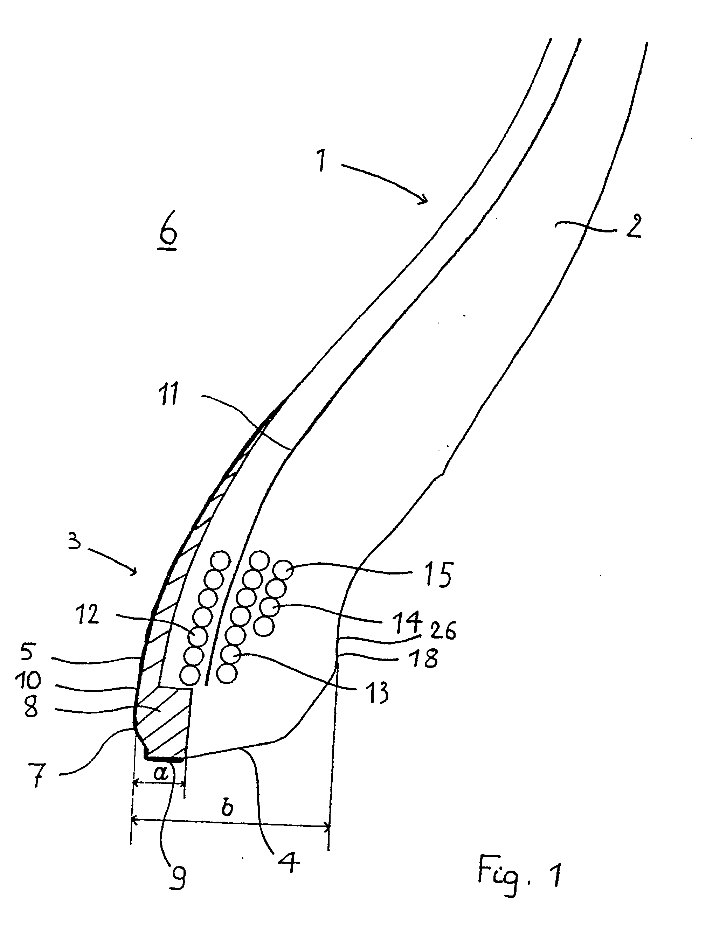

La figure 1 présente en coupe un exemple de bourrelet 3 d'un pneumatique 1 selon l'invention. Ce bourrelet 3 a une structure qui a été récemment proposée dans la demande de brevet EP 0582196. Ce bourrelet 3 est dépourvu de l'habituel retournement de la carcasse autour d'une tringle. Au lieu de cela, à l'endroit de l'ancrage, les éléments renforçants de carcasse 11 sont disposés en un alignement. En imaginant la disposition de l'ensemble de ces éléments 11 dans l'espace, ceux-ci dessinent approximativement, à l'intérieur de l'alignement, un tronc de cône partiel d'axe confondu avec l'axe de rotation du pneumatique. Les éléments renforçants de carcasse 11 sont bordés latéralement par trois piles 12, 13 et 14 d'éléments renforçants circonférentiels 15. Ces piles sont réalisées par exemple par bobinage en spirale. La pile 12 est placée du côté de la cavité interne 6 du pneumatique relativement aux éléments de renforcement de carcasse 11. Les piles 13 et 14 sont situées du côté extérieur du pneumatique. Les mélanges caoutchouteuse placés entre les piles 12, 13, 14 et les éléments renforçants de carcasse 11 assurent la reprise des efforts entre ces éléments renforçants 11, 12, 13 et 14 orientés perpendiculairement les uns par rapport aux autres.

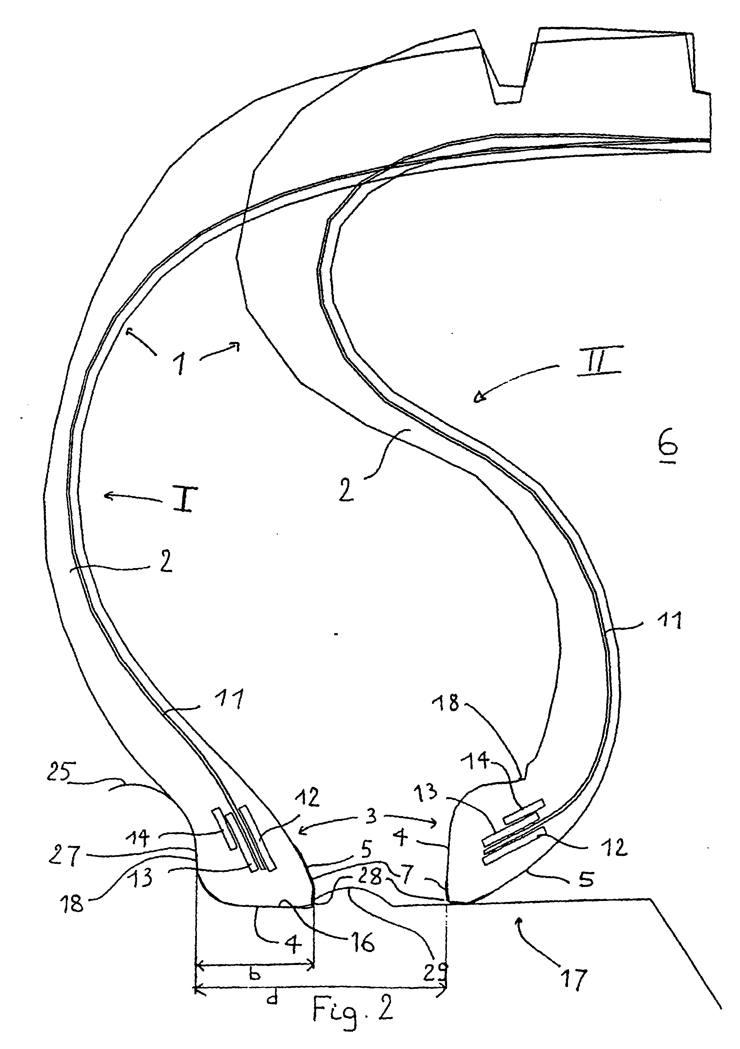

Le bourrelet est délimité par une paroi radialement intérieure ou siège 4 sensiblement tronconique destinée à reposer sur la paroi radialement extérieure ou siège 16 d'une jante 17 (voir figure 2). Cette paroi 4 est séparée en deux parties, une partie axialement extérieure du côté de l'extérieur du pneumatique et une partie 9 axialement intérieure du côté de la cavité interne du pneumatique. Le bourrelet est aussi délimité, du côté de la cavité interne 6 du pneumatique 1, par une paroi axialement intérieure 5 et, du côté de l'extérieur du pneumatique, par une paroi axialement extérieure 18. Un mélange de caoutchouc 8 est disposé adjacent à la partie 9 du siège 4 du côté de la cavité interne 6 du pneumatique 1 ainsi qu'à la partie 10 radialement la plus basse de la paroi axialement intérieure 5. Le bourrelet 3 se prolonge radialement par le flanc 2 du pneumatique 1.

Ce mélange de caoutchouc 8 a une formulation tout à fait usuelle à l'exception près qu'il comporte en outre un composé partiellement soluble qui va migrer à la surface des parties 9 et 10 pour constituer une couche de glissement 7. Ce composé est inclus dans une proportion supérieure ou égale à 3 pce (parties pour cent parties en poids d'élastomère). Il est à noter que ce composé n'est que très peu soluble dans un mélange de caoutchouc à base de caoutchouc butyle. Dans le cas où le mélange 8 comporterait du caoutchouc butyle, il est donc nécessaire de limiter la teneur maximale en caoutchouc butyle à 50 pce.

Ce composé est, par exemple, un éthylène bis-oléamide (Crodamide® EBO). La migration en surface de ce composé permet d'obtenir une couche de glissement stable présentant un coefficient de frottement particulièrement bas, inférieur à 0,1.

Le siège 4 a une longueur axiale *b*. Cette longueur est définie aux figures 1 et 2 comme la distance séparant axialement l'extrémité de la paroi axialement intérieure 5 de la zone 26 de la paroi axialement extérieure 18 destinée à être disposée sur la partie radiale 27 du crochet de jante 25. La longueur axiale *a* de la partie 9 adjacente au mélange de caoutchouc 8 et ainsi revêtue d'une couche de glissement 7 est de l'ordre de 3 à 4 mm. Cette longueur *a* doit être limitée à environ le quart de la longueur axiale *b* du siège 4 pour ne pas dégrader les performances en service du pneumatique, notamment l'efficacité anti-décoincement du hump 29, et pour éviter toute rotation sur jante.

La hauteur radiale du mélange de caoutchouc 8 le long de la paroi axialement intérieure 5 est ici de l'ordre de 10 mm. Cette hauteur peut être très variable en fonction de la rigidité en rotation du bourrelet considéré. Elle est, préférentiellement, d'autant plus élevée que la rigidité en rotation du bourrelet du pneumatique est faible.

La figure 2 illustre le phénomène de basculement du bourrelet 3 lors de la première phase du démontage, le décoincement du bourrelet 3 du crochet 25 et du siège 16 de la jante 17. Dans cette figure, les piles 12, 13 et 14 sont représentées plus schématiquement sans distinguer comme dans la figure 1 les éléments renforçants circonférentiels 15.

Le pneumatique 1 dans la position I est monté sur la jante 17. A la position II, après avoir subi un déport *d*, c'est-à-dire un déplacement axial de longueur *d* du bourrelet, on voit que le bourrelet 3 est partiellement basculé de telle sorte que seule la zone de liaison 28 entre la paroi axialement intérieure 5 et l'extrémité du siège 4 est en contact avec la jante 17. Cette zone 28 est recouverte d'une couche de glissement 7 constituée du composé précédemment décrit. En conséquence, le coefficient de frottement entre le bourrelet et la jante est très bas, ce qui facilite le décoincement du bourrelet.

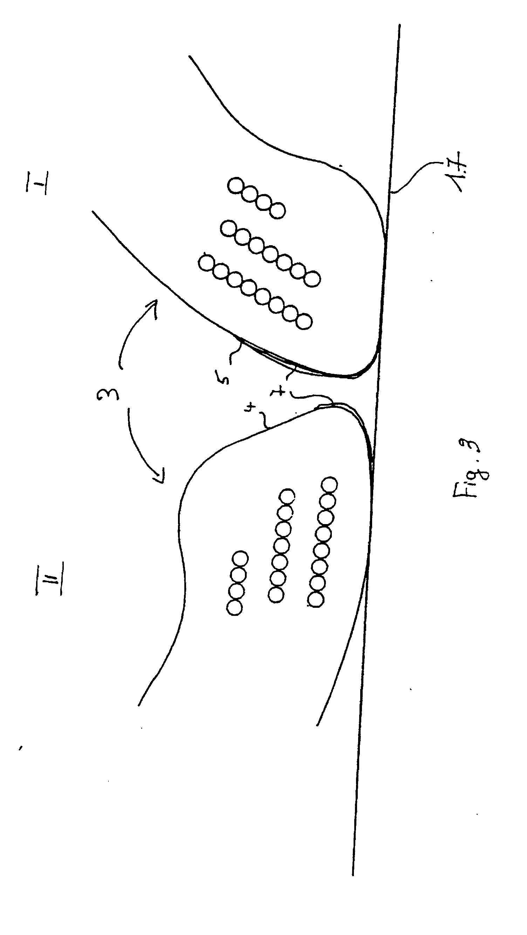

A la figure 3, on voit un bourrelet 3 ayant complètement basculé au cours d'une opération de décoincement réalisée dans des conditions plus sévères. Dans ce cas, la zone de contact entre le bourrelet 3 et la jante 17 correspond à la partie 10 radialement la plus basse de la paroi axialement intérieure 5 du bourrelet 3. Cette zone est bien lubrifiée par la couche de glissement 7 et le décoincement est ainsi encore facilité.

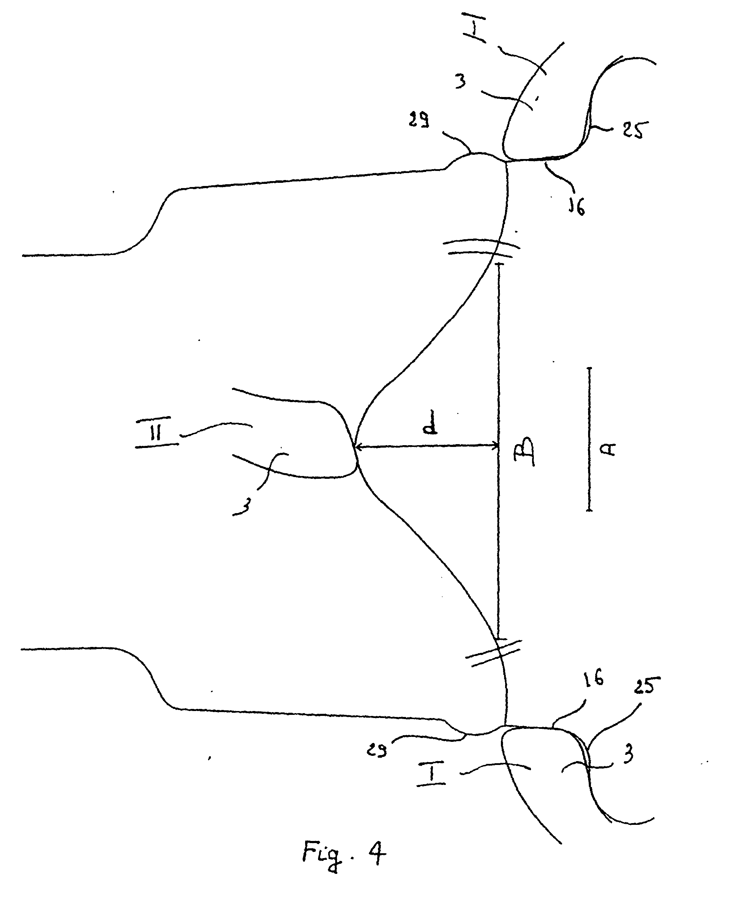

La figure 4 illustre schématiquement l'évolution de la position du bourrelet 3 relativement au crochet 25 de jante 17 pendant la première phase du démontage. Sur ce schéma, on voit deux profils extérieurs de jante 17 avec un bourrelet 3 en place contre les hump 29, siège 16 et crochet 25. Cela correspond à la position I de la figure 2. Le centre du schéma correspond à la zone A d'application d'un poussoir contre le bourrelet 3, cette zone s'étend sur un arc d'environ 60 degrés. Dans cette zone, un bourrelet 3 est présenté en position retournée. Cela correspond à la position II de la figure 2. On appelle "déport du bourrelet relativement au crochet de jante" l'écartement de ce bourrelet relativement à sa position initiale en place contre le siège et le crochet de la jante. Ce schéma de la figure 4 illustre la zone décoincée B du bourrelet, c'est à dire, l'arc où le bourrelet est écarté de sa position initiale ainsi que l'évolution du déport en fonction de la position angulaire relativement au poussoir. On appelle cet arc 2 $\alpha$.

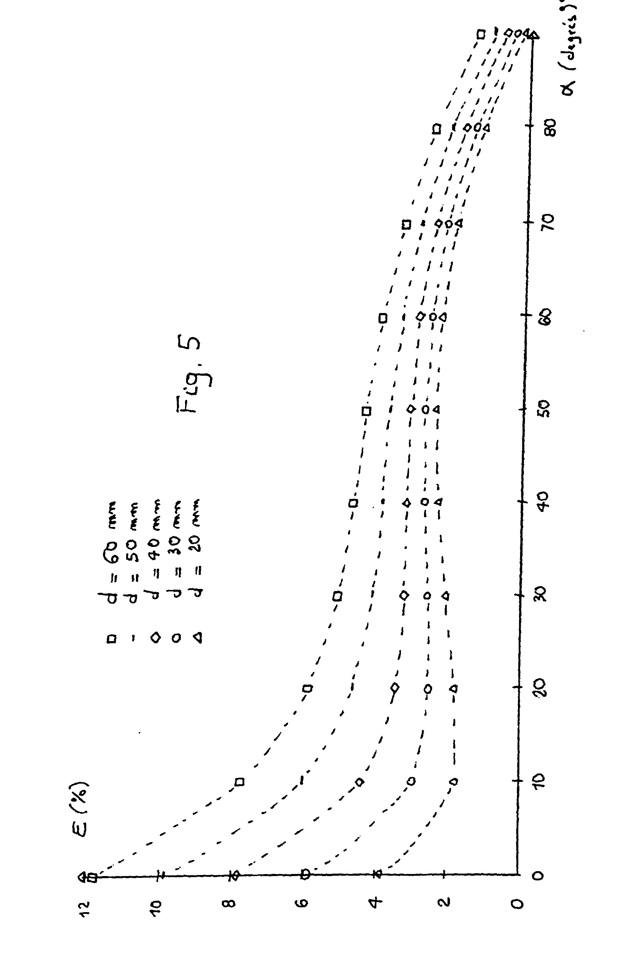

La figure 5 présente l'évolution de l'allongement $\varepsilon$ (en %) des fils d'une tringle en fonction de l'angle de décoincement $\alpha$ (cet angle correspond à la moitié de l'arc de la circonférence du bourrelet effectivement décoincée ; $\alpha$ est en degrés) et du déport *d* ( en millimètres) imposé au bourrelet par le poussoir (voir figure 4).

Une valeur approchée de cet allongement pour des valeurs d'angle $\alpha$ inférieur à 90 degrés est donné par la formule suivante où R correspond au rayon de la tringle :

$$\frac{\Delta L}{L} \approx \frac{1}{2}\sqrt{1 - \cos\alpha + \frac{d^2}{2R^2}} - \frac{\alpha}{180}$$

Etant donné que le déport atteint très facilement 40 mm, on voit sur ces courbes que pour limiter l'allongement subi par la tringle ou par des éléments de renforts circonférentiels à des valeurs inférieures à 4 %, il est souhaitable que la valeur des angles $\alpha$ atteigne 60 degrés.

Des pneumatiques avec des bourrelets comprenant une couche de glissement selon l'invention ont été testés. Pour ces pneumatiques, avec un déport de 40 mm, des valeurs de $\alpha$ supérieures à 60 degrés ont été mesurées.

## Revendications

**1.** Pneumatique (1) comportant un sommet et des flancs (2) prolongés par des bourrelets (3) définissant une cavité interne (6), chaque bourrelet (3) étant délimité, du côté radialement intérieur, par une paroi radialement intérieure (4) ayant une partie axialement extérieure et une partie (9) axialement intérieure, ladite paroi (4) étant sensiblement tronconique et étant destinée à reposer sur une jante (17) et, du côté de la cavité interne (6) du pneumatique (1), par une paroi axialement intérieure (5), ledit bourrelet comportant un matériau (8) adjacent à une partie des parois dudit bourrelet et tel que la surface extérieure dudit matériau (8) constitue une couche de glissement (7), **caractérisé en ce que** ledit matériau est disposé en forme de L de façon adjacente à la partie (9) axialement intérieure de ladite paroi radialement intérieure (4) et au moins la partie (10) radialement la plus basse de ladite paroi axialement intérieure (5).

2. Pneumatique (1) selon la revendication 1, dans lequel la partie (9) axialement intérieure de la paroi radialement intérieure (4) recouverte par ladite couche de glissement (7) s'étend axialement sur une longueur *a* inférieure au quart de la longueur axiale *b* de ladite paroi radialement intérieure (4).

3. Pneumatique (1) selon l'une des revendications 1 ou 2, dans lequel la partie (10) de la paroi axialement intérieure (5) recouverte par ladite couche de glissement (7) s'étend radialement sur une longueur d'au moins 10 mm.

4. Pneumatique (1) selon l'une des revendications 1 à 3, dans lequel la couche de glissement (7) recouvrant les parties (9, 10) est constituée par la migration en surface d'un composé présent dans le mélange de caoutchouc (8) adjacent auxdites parties (9, 10).

5. Pneumatique (1) selon la revendication 4, dans lequel ledit composé est un amide d'acide gras.

6. Pneumatique (1) selon la revendication 5, dans lequel ledit composé est un oléamide.

7. Pneumatique (1) selon la revendication 6, dans lequel ledit composé est un éthylène bis-oléamide.

8. Pneumatique (1) selon l'une des revendications 4 à 7, dans lequel ledit mélange de caoutchouc (8) comprend au moins un élastomère choisi dans le groupe des caoutchoucs naturel, polybutadiène, SBR, butyle, la teneur en caoutchouc butyle étant inférieure ou égale à 50 parties pour cent parties en poids d'élastomère, ainsi qu'au moins 3 parties pour cent parties en poids d'élastomère dudit composé.

**Claims**

1. A tyre (1) comprising a crown and sidewalls (2) which are extended by beads (3) defining an inner cavity (6), each bead (3) being defined, on the radially inner side, by a radially inner wall (4) having an axially outer part and an axially inner part (9), said wall (4) being substantially frustoconical and being intended to rest on a rim (17) and, on the side of the inner cavity (6) of the tyre (1), by an axially inner wall (5), said bead comprising a material (8) adjacent to part of the walls of said bead and such that the outer surface of said material (8) constitutes a sliding layer (7), **characterised in that** said material is arranged in the shape of an L adjacent to the axially inner part (9) of said radially inner wall (4) and at least the radially lowermost part (10) of said axially inner wall (5).

2. A tyre (1) according to Claim 1, in which the axially inner part (9) of the radially inner wall (4) covered by said sliding layer (7) extends axially over a length a less than one-quarter of the axial width b of said radially inner wall (4).

3. A tyre (1) according to one of Claims 1 or 2, in which that part (10) of the axially inner wall (5) covered by said sliding layer (7) extends radially over a length of at least 10 mm.

4. A tyre (1) according to one of Claims 1 to 3, in which the sliding layer (7) covering the parts (9, 10) is formed by the migration to the surface of a compound present in the rubber mix (8) adjacent to said parts (9, 10).

5. A tyre (1) according to Claim 4, in which said compound is a fatty acid amide.

6. A tyre (1) according to Claim 5, in which said compound is an oleamide.

7. A tyre (1) according to Claim 6, in which said compound is an ethylene bis oleamide.

8. A tyre (1) according to one of Claims 4 to 7, in which said rubber mix (8) comprises at least one elastomer selected from the group consisting of natural rubbers, polybutadiene, SBR, butyl, the content of butyl rubber being less than or equal to 50 parts per hundred parts by weight of elastomer, and at least 3 parts per hundred parts by weight of elastomer of said compound.

**Patentansprüche**

1. Reifen (1), der einen Scheitel und Flanken (2) aufweist, die durch Wülste (3) verlängert sind, die eine innere Höhlung (6) definieren, wobei jeder Wulst (3) auf der radial inneren Seite durch eine radial innere Wand (4), die einen axial äußeren Abschnitt und einen axial inneren Abschnitt (9) aufweist, wobei die genannte Wand (4) im wesentlichen kegelstumpfförmig ist und dazu bestimmt ist, auf einer Felge (17) zu ruhen, und auf der Seite der inneren Höhlung (6) des Reifens (1) durch eine axial innere Wand (5) begrenzt ist, wobei der genannte Wulst ein Material (8) nahe einem Abschnitt der Wände des genannten Wulstes aufweist, und zwar derart, daß die Außenoberfläche des genannten Materials (8) eine Gleitschicht (7) bildet, **dadurch gekennzeichnet, daß** das genannte Material L-förmig neben dem axial inneren Abschnitt (9) der radial inneren Wand (4) und mindestens dem radial untersten Abschnitt (10) der axial inneren Wand (5) angeordnet ist.

2. Reifen (1) nach Anspruch 1, worin der axial innere Abschnitt (9) der radial inneren Wand (4), der durch die genannte Gleitschicht (7) abgedeckt ist, sich axial über eine Länge a erstreckt, die kleiner als an Viertel der axialen Länge b der genannten, radial inneren Wand (4).

3. Reifen (1) nach einem der Ansprüche 1 oder 2, worin der Abschnitt (10) der axial inneren Wand (5), der von der genannten Gleitschicht (7) abgedeckt ist, sich radial über eine Länge von mindestens 10 mm erstreckt.

4. Reifen (1) nach einem der Ansprüche 1 bis 3, worin die Gleitschicht (7), die die Abschnitte (9, 10) abdeckt, durch Migration einer Verbindung an die Oberfläche gebildet ist, die in der Kautschukmischung (8) nahe den genannten Abschnitten (9, 10) vorliegt.

5. Reifen (1) nach Anspruch 4, worin die genannte Verbindung ein Fettsäureamid ist.

6. Reifen (1) nach Anspruch 5, worin die genannte Verbindung ein Ölsäureamid ist.

7. Reifen (1) nach Anspruch 6, worin die genannte Verbindung ein Ethylen-bis-oleamid ist.

8. Reifen (1) nach einem der Ansprüche 4 bis 7, worin die genannte Kautschukmischung (8) mindestens ein Elastomer aufweist, das unter Naturkautschuk, Polybutadien, SBR und Butylkautschuk ausgewählt ist, wobei der Gehalt an Butylkautschuk kleiner oder gleich 50 Teile auf hundert Gewichtsteile Elastomer ist, sowie mindestens 3 Teile der Verbindung auf hundert Gewichtsteile Elastomer.

Fig. 1

Fig. 2

Fig. 3

EP 0 839 674 B1

Fig. 4

Fig. 5

EP 0 839 674 B1